# FASCICULE DE BREVET EUROPEEN

(11) **EP 4 067 691 B1**
(45) Date de publication et mention de la délivrance du brevet: **21.02.2024**
(21) Numéro de dépôt: 22164289.5
(22) Date de dépôt: 25.03.2022
(51) Int. Cl.: F16F 9/56, F16F 9/36, F16F 9/06, B60G 13/08, B60G 17/08

(54) **AMORTISSEUR HYDRAULIQUE DE SUSPENSION DE VEHICULE AUTOMOBILE A FONCTION DE VERIN PNEUMATIQUE**
HYDRAULISCHER STOSSDÄMPFER FÜR DIE FAHRZEUGAUFHÄNGUNG MIT PNEUMATISCHER KOLBENFUNKTION
HYDRAULIC DAMPER FOR SUSPENSION OF A MOTOR VEHICLE WITH PNEUMATIC CYLINDER FUNCTION

(30) Priorité: 31.03.2021 FR 2103362
(43) Date de publication de la demande: 05.10.2022
(73) Titulaire: Renault s.a.s, 92100 Boulogne Billancourt (FR)
(72) Inventeur: ROLLET, Remi, 78280 Guyancourt (FR)
(74) Mandataire: Renault Group

(56) Documents cités:
- EP-A2- 0 353 703
- WO-A1-2004/098919
- JP-A- 2020 085 104
- US-A- 4 494 632

## Description

### Domaine technique de l'invention

La présente invention concerne un amortisseur hydraulique auquel est associée une fonction additionnelle de vérin pneumatique, notamment pour faire varier la hauteur de caisse d'un véhicule automobile équipé de tels amortisseurs.

L'invention concerne plus particulièrement la conception des moyens d'étanchéité d'un tel amortisseur.

### Arrière-plan technique

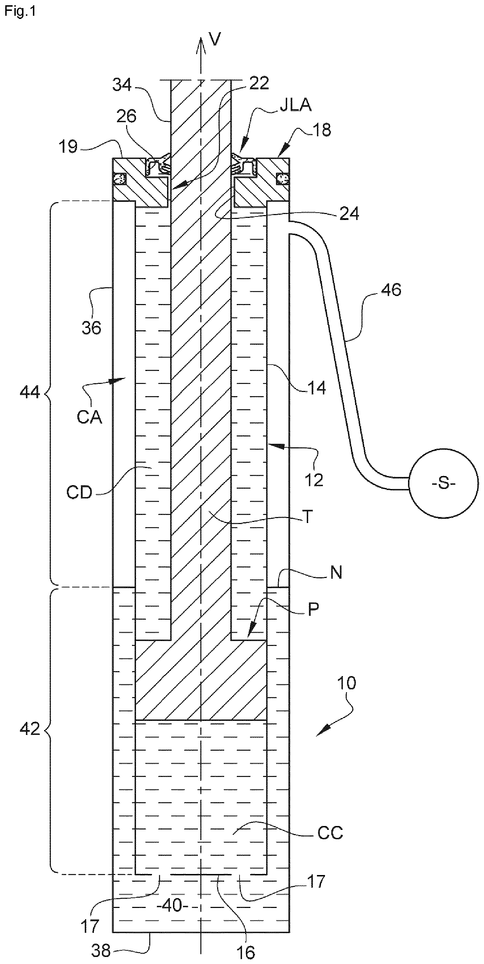

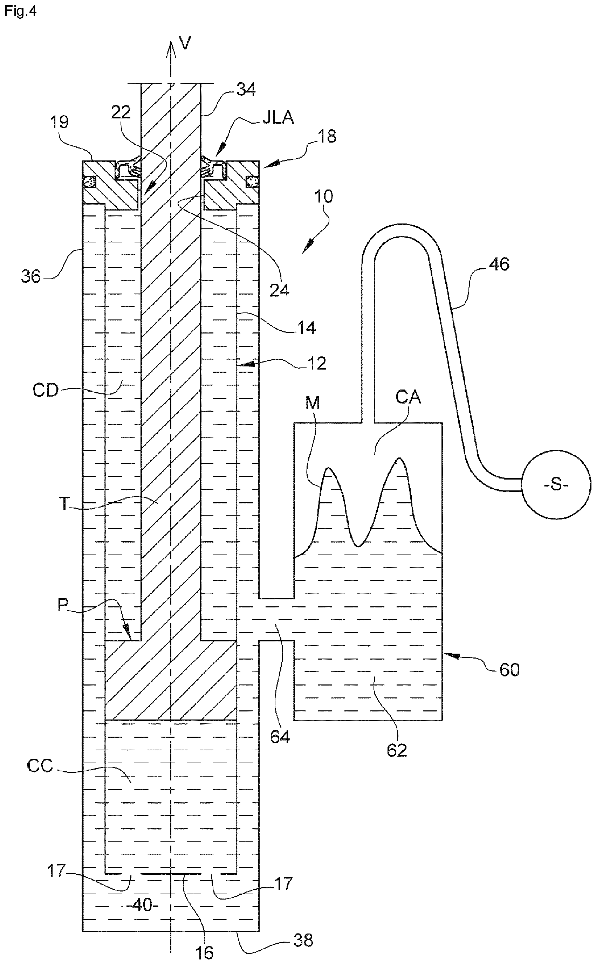

On connait la conception générale d'un amortisseur hydraulique 10 de suspension de véhicule automobile, dont deux exemples sont illustrés aux figures 1 et 4, qui comporte :
- un cylindre d'amortissement 12 qui délimite une chambre d'amortissement remplie d'un liquide d'amortissement, notamment d'huile ;
- un piston d'amortissement P qui est monté coulissant axialement à l'intérieur de la chambre d'amortissement qu'il divise en une chambre de compression CC et une chambre de détente CD ;
- une tige d'amortisseur T reliée au piston d'amortissement P qui s'étend axialement à l'intérieur de la chambre de détente et traverse une paroi radiale d'extrémité du cylindre interne d'amortissement, avec interposition d'un joint dynamique d'étanchéité liquide / air JLA ; et
- une chambre externe CA de commande alimentée par une source S d'air sous pression pour augmenter la pression du liquide d'amortissement dans la chambre de compression CC.

L'amortisseur comporte éventuellement un tube externe coaxial au cylindre d'amortissement 12 avec lequel il délimite la chambre externe CA de commande alimentée par la source S d'air sous pression pour augmenter la pression du liquide d'amortissement dans la chambre de compression CC et ainsi faire varier la longueur de la portion de la tige d'amortisseur T qui fait saillie axialement hors de l'amortisseur.

Selon l'exemple illustré à la figure 1, la chambre externe CA de commande est reliée directement à la source S d'air sous pression, le niveau de la délimitation huile/air se situant dans cette chambre.

Selon le second exemple illustré à la figure 4, l'amortisseur 10 comporte un dispositif d'augmentation de la pression du liquide d'amortissement dans la chambre de compression CC qui comporte une cavité remplie de liquide d'amortissement qui est reliée à la chambre externe CA de commande, et une cavité remplie d'air qui est séparée de la cavité liquide par une membrane élastique M et qui est alimentée par la source S d'air sous pression.

Afin de produire des efforts suffisants de levage de la caisse du véhicule, puis de permettre un roulage en position haute de la caisse, la pression nécessaire régnant à l'intérieur de l'amortisseur est de plusieurs dizaines de bars, et par exemple comprise entre 20 bars et 40 bars.

Du fait de telles pressions élevées, le joint d'étanchéité liquide / air JLA qui est traversé par la tige T d'amortisseur est soumis à une différence élevée de pressions entre la pression de l'huile régnant à l'intérieur du cylindre d'amortissement et la pression atmosphérique de l'air. Il est impératif de réduire, voire de supprimer les éventuelles fuites d'huile, car elles aboutissent à un remplacement prématuré de l'amortisseur.

Une première solution consiste à faire appel à une conception renforcée du joint d'étanchéité liquide / air qui coopère avec la tige, mais elle a pour inconvénient d'introduire des frottements importants au niveau de la tige qui nuisent au bon coulissement de la tige d'amortisseur lors du fonctionnement de l'amortisseur et qui aboutissent à un manque de confort de la suspension.

Un tel amortisseur est également connu du document WO2004/098919A1, qui est considéré comme l'art antérieur le plus proche.

L'invention a pour but de proposer une conception améliorée de l'étanchéité au niveau de la traversée par la tige d'amortisseur.

### Résumé de l'invention

Dans ce but, l'invention propose un amortisseur du type mentionné précédemment, caractérisé en ce que, axialement au-delà de la paroi radiale, le cylindre d'amortissement est prolongé par un cylindre d'étanchéité qui délimite une chambre d'étanchéité qui est alimentée par la source d'air sous pression et qui est traversée axialement par la tige d'amortisseur avec interposition d'un deuxième joint dynamique d'étanchéité air / air.

Selon d'autres caractéristiques de l'invention :
- l'amortisseur comporte un tube externe coaxial au cylindre d'amortissement avec lequel il délimite la chambre externe de commande alimentée par la source d'air sous pression pour augmenter la pression du liquide d'amortissement dans la chambre de compression ;
- la chambre externe de commande est alimentée directement en air sous pression par la source d'air sous pression ;
- l'amortisseur comporte un dispositif externe d'augmentation de la pression du liquide d'amortissement dans la chambre de compression qui comporte une cavité remplie de liquide d'amortissement qui est reliée à la chambre de compression, et une cavité remplie d'air qui est séparée de la cavité remplie de liquide par une membrane élastique et qui est alimentée en air sous pression par la source d'air sous pression pour constituer ladite chambre de commande ;
- le premier joint dynamique d'étanchéité liquide / air est un joint à lèvre(s) qui coopère(nt) avec la tige d'amortisseur ;
- le deuxième joint dynamique d'étanchéité air / air est un joint à lèvre(s) qui coopère(nt) avec la tige d'amortisseur.

L'invention propose aussi un ensemble de suspension de véhicule automobile, caractérisé en ce qu'il comporte au moins un amortisseur selon l'invention.

L'ensemble de suspension de véhicule automobile selon l'invention est caractérisé en ce qu'il comporte un circuit de commande de la hauteur de caisse du véhicule qui fait varier la pression de l'air dans la chambre externe de commande de chaque amortisseur. L'invention propose encore un véhicule automobile, caractérisé en ce qu'il comporte un ensemble de suspension selon l'invention.

### Brève descriptions des figures

D'autres caractéristiques et avantages de l'invention apparaitront au cours de la lecture de la description détaillée qui va suivre pour la compréhension de laquelle on se reportera aux dessins annexés dans lesquels :
[Fig.1] - la figure 1 est une vue schématique en coupe axiale d'un premier exemple d'un amortisseur hydraulique associé à une source d'air sous pression qui comporte un seul joint d'étanchéité liquide / air selon l'état de la technique ;
[Fig.2] - la figure 2 est une vue à plus grande échelle de la partie supérieure de l'amortisseur de la figure 1 qui représente en détail l'agencement et la conception du joint d'étanchéité liquide / air ;
[Fig.3] - la figure 3 est une vue analogue à celle de la figure 2 qui représente en détail l'agencement et la conception selon l'invention du joint d'étanchéité liquide / air associé à une chambre d'étanchéité et à un joint d'étanchéité air / air ;
[Fig.4] - la figure 4 est une vue schématique en coupe axiale d'un second exemple d'un amortisseur hydraulique associé à une source d'air sous pression qui comporte un seul joint d'étanchéité liquide / air selon l'état de la technique;
[Fig.5] - la figure 5 est une vue à plus grande échelle de la partie supérieure de l'amortisseur de la figure 4 qui représente en détail l'agencement et la conception selon l'invention du joint d'étanchéité liquide / air associé à une chambre d'étanchéité et à un joint d'étanchéité air / air.

### Description détaillée de l'invention

Pour la description de l'invention et la compréhension des revendications, à titre non limitatif et sans référence limitative à la gravité terrestre, on adoptera une orientation verticale selon l'axe principal V de l'amortisseur indiqué aux figures.

Par convention, l'axe vertical L est orienté de bas en haut.

Dans la description qui va suivre, des éléments identiques, similaires ou analogues seront désignés par les mêmes chiffres de référence.

### Premier exemple de réalisation

### Figures 1 à 3.

On a représenté à la figure 1 un amortisseur hydraulique 10 qui est associé à une source de gaz sous pression S.

L'amortisseur 10 comporte un cylindre interne d'amortissement 12 comportant une paroi latérale tubulaire 14 et une paroi radiale inférieure 16 appelée plancher qui peut comporter des composants dits de « clapéterie » de plancher.

A son extrémité supérieure, le cylindre d'actionnement 12 est fermé de manière étanche par une paroi radiale supérieure qui est ici réalisée sous la forme d'un bouchon 18.

Ainsi, le cylindre d'amortissement délimite une chambre interne d'amortissement à l'intérieur duquel un piston P est monté coulissant axialement et divise la chambre d'amortissement en une chambre, ici inférieure, de compression CC, et une chambre supérieure de détente CD. Le piston P est lié en translation axiale à une tige T de piston.

La tige T s'étend axialement au-dessus du piston P à travers la chambre supérieure de détente CD, puis à travers la paroi radiale supérieure constituée par le bouchon 18.

Le bouchon 18 comporte à cet effet un perçage étagé 22 qui comporte un tronçon inférieur 24 de plus petit diamètre qui est traversé avec un jeu radial minimal par la tige de piston T et qui débouche axialement vers le bas dans la chambre supérieure de détente CD.

Le perçage étagé 22 comporte aussi un tronçon supérieur 26 de plus grand diamètre qui débouche axialement vers le haut dans la face supérieure 19 du bouchon 18.

Selon un agencement connu, le tronçon supérieur 26 sert de logement à un joint d'étanchéité JLA dit joint liquide / air.

Le joint d'étanchéité liquide / air JLA est monté dans le logement 26 par sa couronne extérieure 30 et il comporte ici trois lèvres radiales d'étanchéité 32 qui coopèrent avec la face latérale cylindrique convexe 34 de la tige de piston T.

La conception du joint d'étanchéité JLA vise à limiter les fuites d'huile vers l'extérieur à travers le perçage étagé 22.

Autour du cylindre d'amortissement 12, l'amortisseur 10 comporte un tube externe coaxial 36 qui est fermé par un fonds 38.

A son extrémité supérieure, le tube externe 36 est fermé de manière étanche par le bouchon 18.

Le fond 38 s'étend, avec jeu axial, en regard de la paroi radiale inférieure 16 du cylindre d'amortissement 12 qui comporte des ouvertures 17 pour permettre la circulation de l'huile entre la chambre inférieure de compression CC et l'espace inférieur 40 délimité axialement par la paroi radiale inférieure 16 et le fond 38.

La paroi 16 peut aussi être un plancher classique selon l'état de la technique.

L'espace inférieur 40 communique aussi avec une chambre latérale tubulaire de commande CA qui s'étend axialement vers le haut depuis la paroi d'extrémité inférieure 16 jusqu'au bouchon supérieur 18.

La partie inférieure 42 de la chambre de commande CA est remplie d'huile, tandis que sa partie supérieure 44 est remplie d'air.

A cet effet, au voisinage de son extrémité supérieure, la chambre de commande CA est reliée par une canalisation 46 à une source S d'air sous pression.

De manière connue, lorsque l'on commande la source S d'air sous pression pour qu'elle provoque une augmentation de pression à l'intérieur de la chambre de commande CA, un effort de sortie est généré qui est appliqué à la tige T, le niveau N correspondant à la séparation entre l'huile et l'air dans la chambre de commande CA baisse, ce qui provoque une augmentation du volume de la chambre de compression CC, et un déplacement associé, verticalement vers le haut du piston P et de la tige de piston T, par exemple pour commander une augmentation de la hauteur de caisse d'un véhicule automobile équipé de tels amortisseurs.

L'huile étant incompressible, le niveau N varie en permanence avec le débattement de l'amortisseur, que ce débattement soit créé par le roulage ou bien par l'application d'une pression externe.

L'invention vise à améliorer l'étanchéité de la chambre supérieure de détente CD autour de la tige de piston T.

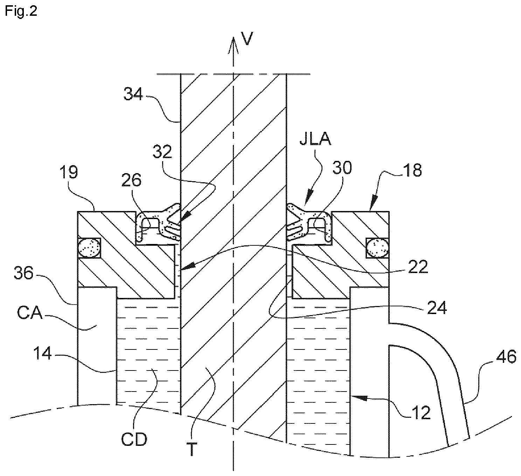

L'invention repose sur le constat selon lequel, dans la conception selon l'état de la technique illustrée aux figures 1 et 2, le joint d'étanchéité liquide / air JLA est soumis à une très forte différence de pressions qui peut atteindre plusieurs dizaines de bars.

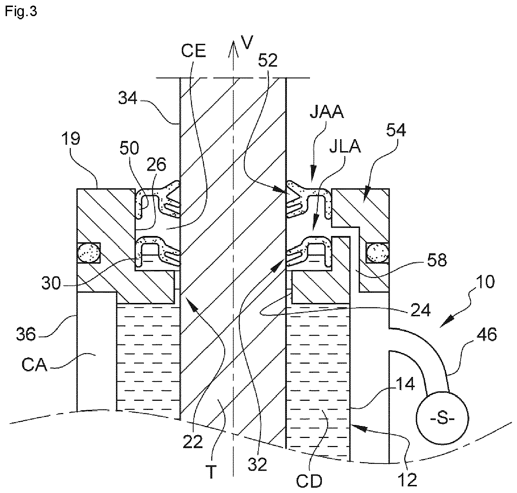

Selon la conception illustrée à la figure 3, l'invention propose d'équiper le bouchon 18 avec un second joint d'étanchéité air / air JAA qui est agencé à l'intérieur du perçage étagé 22, verticalement au-dessus du premier joint d'étanchéité liquide / air JLA.

Le second joint d'étanchéité air / air JAA est monté dans le logement 26 par sa couronne extérieure 50 et il comporte ici trois lèvres radiales d'étanchéité 52 qui coopèrent avec la face latérale cylindrique convexe 34 de la tige de piston T.

Avec le premier joint d'étanchéité liquide / air JLA et la paroi latérale concave du logement 26, le second joint d'étanchéité air / air JAA délimite une chambre supérieure d'étanchéité CE.

Ainsi, au-dessus de la paroi radiale supérieure que constitue le bouchon 18 illustré aux figures 1 et 2, le cylindre d'amortissement 12 se prolonge axialement vers le haut par un cylindre d'étanchéité 54 qui délimité radialement la chambre d'étanchéité CE.

La chambre d'étanchéité CE est reliée à la partie supérieure 44 de la chambre de commande CA - et donc à la source d'air sous pression S - par un passage 58.

Ainsi, la valeur de la pression régnant dans la chambre d'étanchéité CE est en permanence sensiblement égale à la valeur de la pression à laquelle le premier joint d'étanchéité liquide / air JLA est soumis, du côté de la chambre de détente CD.

Ainsi, le premier joint d'étanchéité liquide / air JLA ne subit quasiment plus aucune différence de pressions et les fuites éventuelles d'huile peuvent être minimisées, voire supprimées.

La chambre d'étanchéité CE agencée à la partie supérieure de l'amortisseur 10 est remplie d'air à une pression qui est soumise à la même pression moyenne que celle de l'huile contenue dans la chambre d'amortissement.

Le premier joint liquide / air JLA n'a pas besoin d'être renforcé pour assurer sa fonction d'étanchéité à l'huile, malgré les pressions élevées pouvant régner à l'intérieur de l'amortisseur lorsque ce dernier est utilisé comme un vérin alimenté en air sous pression par la source S.

On peut aussi supprimer la lèvre 32 la plus axialement supérieure car elle n'est plus soumise à des pollutions venant de l'extérieur.

Le second joint air / air JAA assure la fonction anti-intrusion d'un joint classique d'amortisseur et comporte des lèvres 52 pour assurer une fonction d'étanchéité à l'air. Toutefois, les performances d'étanchéité de ce second joint ne nécessitent pas d'être exceptionnelles, puisque l'air introduit par la source S d'air comprimé - qui est par exemple fournie par un compresseur - est sans cesse renouvelé, ce qui autorise donc des micro-fuites vers l'atmosphère, sans dysfonctionnement.

### Second exemple de réalisation

### Figures 4 et 5.

On a représenté à la figure 4 un amortisseur hydraulique 10 selon l'état de la technique qui est associé à une source de gaz sous pression S.

Par comparaison avec le premier exemple qui vient d'être décrit en référence aux figures 1 à 3, l'amortisseur 10 comporte un dispositif externe 60 d'augmentation de la pression du liquide d'amortissement dans la chambre de compression CD qui comporte une cavité 62 remplie de liquide d'amortissement qui est reliée à la chambre de compression CC par une canalisation 64 qui débouche dans la chambre tubulaire périphérique délimitée par le cylindre d'amortissement 12 et le tube externe 36.

Le dispositif externe 60 comporte aussi une cavité remplie d'air CA qui est séparée de la cavité remplie de liquide par une membrane élastique M et qui est alimentée en air sous pression par la source d'air sous pression S, de manière à constituer la chambre de commande au sens de l'invention.

La partie supérieure de l'amortisseur 10 selon l'état de la technique est identique à celle décrite en référence aux figures 1 et 2 avec un seul joint d'étanchéité liquide / air JLA.

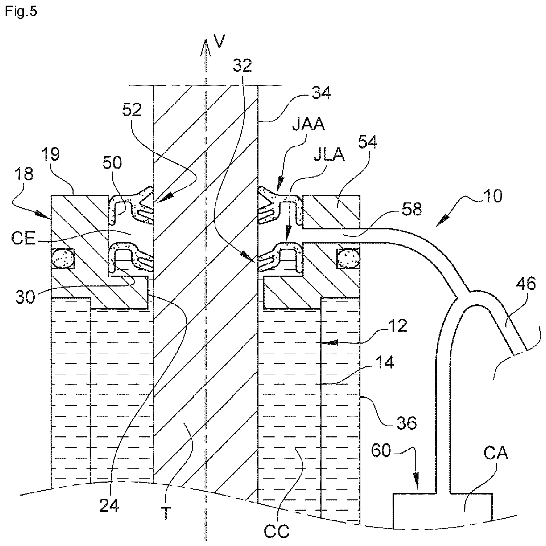

De même la modification de cette partie supérieure selon l'invention qui est représentée à la figure 5 est analogue à celle représentée à la figure 3.

La canalisation 58 d'alimentation en air sous pression de la chambre d'étanchéité (CE) est reliée en dérivation sur la canalisation 46 qui relie la source S d'air sous pression à la chambre active CA du dispositif externe 60.

## Revendications

1. Amortisseur hydraulique (10), notamment de suspension de véhicule automobile comportant :
- un cylindre d'amortissement (12) qui délimite une chambre d'amortissement remplie d'un liquide d'amortissement ;
- un piston d'amortissement (P) qui est monté coulissant axialement à l'intérieur de la chambre d'amortissement qu'il divise en une chambre de compression (CC) et une chambre de détente (CD) ;
- une tige d'amortisseur (T) reliée au piston d'amortissement (P) qui s'étend axialement à l'intérieur de la chambre de détente (CD) et traverse une paroi (18) radiale d'extrémité du cylindre d'amortissement (12) avec interposition d'un premier joint dynamique d'étanchéité liquide / air (JLA) ; et
- une chambre externe (CA) de commande alimentée par une source (S) d'air sous pression pour augmenter la pression du liquide d'amortissement dans la chambre de compression (CC),
**caractérisé en ce que**, axialement au-delà de la paroi radiale (18) d'extrémité, le cylindre d'amortissement (12) est prolongé par un cylindre d'étanchéité (54) qui délimite une chambre d'étanchéité (CE) qui est alimentée par la source (S) d'air sous pression et qui est traversée axialement par la tige d'amortisseur (T) avec interposition d'un deuxième joint dynamique d'étanchéité air / air (JAA).

2. Amortisseur hydraulique (10) selon la revendication 1, **caractérisé en ce qu'**il comporte un tube externe (36) coaxial au cylindre d'amortissement (12) avec lequel il délimite la chambre externe (CA) de commande alimentée par la source (S) d'air sous pression pour augmenter la pression du liquide d'amortissement dans la chambre de compression (CC).

3. Amortisseur hydraulique (10) selon la revendication 2, **caractérisé en ce que** la chambre externe (CA) de commande est alimentée directement en air sous pression par la source (S) d'air sous pression.

4. Amortisseur hydraulique (10) selon la revendication 2, **caractérisé en ce qu'**il comporte un dispositif externe (60) d'augmentation de la pression du liquide d'amortissement dans la chambre de compression (CC) qui comporte une cavité (62) remplie de liquide d'amortissement qui est reliée à la chambre de compression (CC), et une cavité (CA) remplie d'air qui est séparée de la cavité remplie de liquide (62) par une membrane élastique (M) et qui est alimentée en air sous pression par la source (S) d'air sous pression pour constituer ladite chambre de commande (CA).

5. Amortisseur hydraulique (10) selon l'une quelconque des revendications précédentes, **caractérisé en ce que** le premier joint dynamique d'étanchéité liquide / air (JLA) est un joint à lèvre(s) (32) qui coopère(nt) avec la tige (T) d'amortisseur.

6. Amortisseur hydraulique (10) selon l'une quelconque des revendications précédentes, **caractérisé en ce que** le deuxième joint dynamique d'étanchéité air / air (JAA) est un joint à lèvre(s) (52) qui coopère(nt) avec la tige (T) d'amortisseur.

7. Ensemble de suspension de véhicule automobile, **caractérisé en ce qu'**il comporte au moins un amortisseur selon l'une quelconque des revendications précédentes.

8. Ensemble de suspension de véhicule automobile selon la revendication 1, **caractérisé en ce qu'**il comporte un circuit de commande de la hauteur de caisse du véhicule qui fait varier la pression de l'air dans la chambre externe (CA) de commande de chaque amortisseur.

9. Véhicule automobile, **caractérisé en ce qu'**il comporte un ensemble de suspension selon l'une des revendications 7 ou 8.

## Patentansprüche

1. Hydraulischer Stoßdämpfer (10), insbesondere für eine Kraftfahrzeugaufhängung, umfassend:
- einen Dämpfungszylinder (12), der eine Dämpfungskammer begrenzt, die mit einer Dämpfungsflüssigkeit gefüllt ist;
- einen Dämpfungskolben (P), der axial verschiebbar im Inneren der Dämpfungskammer gelagert ist, welche er in eine Druckkammer (CC) und eine Entspannungskammer (CD) aufteilt;
- eine mit dem Dämpfungskolben (P) verbundene Stoßdämpferstange (T), die sich axial im Inneren der Entspannungskammer (CD) erstreckt und eine radiale Endwand (18) des Dämpfungszylinders (12) durchquert, wobei dazwischen eine erste dynamische Dichtung Flüssigkeit/Luft (JLA) angeordnet ist; und
- eine äußere Steuerkammer (CA), die von einer Druckluftquelle (S) gespeist wird, um den Druck der Dämpfungsflüssigkeit in der Druckkammer (CC) zu erhöhen, **dadurch gekennzeichnet, dass** der Dämpfungszylinder (12) axial jenseits der radialen Endwand (18) durch einen Dichtungszylinder (54) verlängert ist, der eine Dichtungskammer (CE) begrenzt, die von der Druckluftquelle (S) gespeist wird und die axial von der Stoßdämpferstange (T) durchquert wird, wobei dazwischen eine zweite dynamische Dichtung Luft/Luft (JAA) angeordnet ist.

2. Hydraulischer Stoßdämpfer (10) nach Anspruch 1, **dadurch gekennzeichnet, dass** er ein äußeres Rohr (36) aufweist, das mit dem Dämpfungszylinder (12) koaxial ist, mit welchem es die äußere Steuerkammer (CA) begrenzt, die von der Druckluftquelle (S) gespeist wird, um den Druck der Dämpfungsflüssigkeit in der Druckkammer (CC) zu erhöhen.

3. Hydraulischer Stoßdämpfer (10) nach Anspruch 2, **dadurch gekennzeichnet, dass** die äußere Steuerkammer (CA) von der Druckluftquelle (S) direkt mit Druckluft gespeist wird.

4. Hydraulischer Stoßdämpfer (10) nach Anspruch 2, **dadurch gekennzeichnet, dass** er eine äußere Vorrichtung (60) zur Erhöhung des Drucks der Dämpfungsflüssigkeit in der Druckkammer (CC) aufweist, die einen mit Dämpfungsflüssigkeit gefüllten Hohlraum (62) aufweist, der mit der Druckkammer (CC) verbunden ist, und einen mit Luft gefüllten Hohlraum (CA), der von dem mit Flüssigkeit gefüllten Hohlraum (62) durch eine elastische Membran (M) getrennt ist und der von der Druckluftquelle (S) mit Druckluft gespeist wird, um die Steuerkammer (CA) zu bilden.

5. Hydraulischer Stoßdämpfer (10) nach einem der vorhergehenden Ansprüche, **dadurch gekennzeichnet, dass** die erste dynamische Dichtung Flüssigkeit/Luft (JLA) eine Dichtung mit einer Lippe (mit Lippen) (32) ist, die mit der Stoßdämpferstange (T) zusammenwirkt (zusammenwirken).

6. Hydraulischer Stoßdämpfer (10) nach einem der vorhergehenden Ansprüche, **dadurch gekennzeichnet, dass** die zweite dynamische Dichtung Luft/Luft (JAA) eine Dichtung mit einer Lippe (mit Lippen) (52) ist, die mit der Stoßdämpferstange (T) zusammenwirkt (zusammenwirken).

7. Aufhängungsanordnung für ein Kraftfahrzeug, **dadurch gekennzeichnet, dass** sie mindestens einen Stoßdämpfer nach einem der vorhergehenden Ansprüche umfasst.

8. Aufhängungsanordnung für ein Kraftfahrzeug nach Anspruch 1, **dadurch gekennzeichnet, dass** sie eine Schaltung zur Steuerung der Karosseriehöhe des Fahrzeugs aufweist, welche eine Änderung des Drucks der Luft in der äußeren Steuerkammer (CA) jedes Stoßdämpfers bewirkt.

9. Kraftfahrzeug, **dadurch gekennzeichnet, dass** es eine Aufhängungsanordnung nach einem der Ansprüche 7 oder 8 aufweist.

## Claims

1. Hydraulic damper (10), in particular for a motor vehicle suspension, comprising:
- a damping cylinder (12) that delimits a damping chamber filled with a damping liquid;
- a damping piston (P) that is mounted to slide axially inside the damping chamber that it divides into a compression chamber (CC) and an expansion chamber (CD);
- a damper rod (T) connected to the damping piston (P) that extends axially inside the expansion chamber (CD) and traverses a radial end wall (18) of the damping cylinder (12) with interposition of a first dynamic liquid/air seal (JLA); and
- an external control chamber (CA) supplied by a pressurized-air source (S) in order to increase the pressure of the damping liquid in the compression chamber (CC) ,
**characterized in that**, axially beyond the radial end wall (18), the damping cylinder (12) is extended by a sealing cylinder (54) that delimits a sealing chamber (CE) that is supplied by the pressurized-air source (S) and that is traversed axially by the damper rod (T) with interposition of a second dynamic air/air seal (JAA).

2. Hydraulic damper (10) according to Claim 1, **characterized in that** it comprises an external tube (36) coaxial to the damping cylinder (12) with which it delimits the external control chamber (CA) supplied by the pressurized-air source (S) in order to increase the pressure of the damping liquid in the compression chamber (CC) .

3. Hydraulic damper (10) according to Claim 2, **characterized in that** the external control chamber (CA) is directly supplied with pressurized air by the pressurized-air source (S).

4. Hydraulic damper (10) according to Claim 2, **characterized in that** it comprises an external device (60) for increasing the pressure of the damping liquid in the compression chamber (CC) that comprises a cavity (62) filled with damping liquid that is connected to the compression chamber (CC), and an air-filled cavity (CA) that is separated from the liquid-filled cavity (62) by an elastic membrane (M) and that is supplied with pressurized air by the pressurized-air source (S) in order to constitute said control chamber (CA).

5. Hydraulic damper (10) according to any one of the preceding claims, **characterized in that** the first dynamic liquid/air seal (JLA) is a lip seal (32) with one or more lips that cooperate with the damper rod (T).

6. Hydraulic damper (10) according to any one of the preceding claims, **characterized in that** the second dynamic air/air seal (JAA) is a lip seal (52) with one or more lips that cooperate with the damper rod (T).

7. Motor vehicle suspension assembly, **characterized in that** it comprises at least one damper according to any one of the preceding claims.

8. Motor vehicle suspension assembly according to Claim 1, **characterized in that** it comprises a circuit for controlling the vehicle body height that varies the pressure of the air in the external control chamber (CA) of each damper.

9. Motor vehicle, **characterized in that** it comprises a suspension assembly according to either of Claims 7 and 8.
